# EUROPÄISCHE PATENTSCHRIFT

(11) **EP 3 314 207 B1**
(45) Veröffentlichungstag und Bekanntmachung des Hinweises auf die Patenterteilung: **01.05.2019**
(21) Anmeldenummer: 16731571.2
(22) Anmeldetag: 21.06.2016
(51) Int. Cl.: G01C 21/34

(54) **VERFAHREN ZUR BESTIMMUNG EINES ZEITLICHEN FAHRTVERLAUFS EINES KRAFTFAHRZEUGS UND KRAFTFAHRZEUG**
METHOD FOR DETERMINING A ROUTE AND TIME FRAME FOR THE TRAVEL OF A MOTOR VEHICLE, AND MOTOR VEHICLE
PROCÉDÉ DE DÉTERMINATION DE L'HISTORIQUE DE CONDUITE D'UN VÉHICULE AUTOMOBILE ET VÉHICULE AUTOMOBILE

(30) Priorität: 23.06.2015 DE 102015211562
(43) Veröffentlichungstag der Anmeldung: 02.05.2018
(73) Patentinhaber: Bayerische Motoren Werke Aktiengesellschaft, 80809 München (DE)
(72) Erfinder: NIEMANN, Julia, 80634 München (DE); EICHHORN, Julian, 80639 München (DE); BREISINGER, Marc, 81737 München (DE); GREIN, Daniel, Novato, California 94947 (US); KUHN, Benjamin, 85774 Unterföhring (DE); SÜSSENGUTH, Philipp, 81247 München (DE)
(86) Internationale Anmeldenummer: PCT/EP2016/064267
(87) Internationale Veröffentlichungsnummer: WO 2016/207140

(56) Entgegenhaltungen:
- EP-A1- 3 104 122
- EP-A2- 2 028 057
- WO-A1-2014/139821
- DE-A1-102010 018 334
- DE-A1-102013 005 076
- DE-T5-112012 003 013
- US-A1- 2007 106 465

## Beschreibung

Die vorliegende Erfindung betrifft ein Verfahren zur Bestimmung eines zeitlichen Fahrtverlaufs eines Kraftfahrzeugs und ferner ein Kraftfahrzeug zur Durchführung des Verfahrens.

Fahrer moderner Kraftfahrzeuge werden bei der Planung und bei der Durchführung ihrer Fahraufgaben durch eine Vielzahl von Fahrerassistenzsystemen unterstützt. Insbesondere haben Navigationssysteme in großer Zahl Einzug in moderne Kraftfahrzeuge gehalten. Diese unterstützen den Fahrer nicht nur bei der Orientierung (also bei der Beantwortung der Frage nach dem derzeitigen Standort), sondern auch bei der Planung und Durchführung der Navigation zu einem gewünschten Zielort.

Moderne Kraftfahrzeuge weisen auch leistungsfähige Anzeigevorrichtungen auf, die dem Fahrer auch komplexe Informationen situationsgerecht darstellen können. Beispiele für solche Anzeigevorrichtungen umfassen frei programmierbare Kombiinstrumente und Head-up-Displays.

Überdies lassen sich moderne Kraftfahrzeuge häufig in unterschiedlichen Fahrmodi betreiben, die der Fahrer frei oder unter Berücksichtigung gewisser Randbedingungen wählen kann. Fahrmodi können z.B. die Antriebsart des Kraftfahrzeugs betreffen. Auch können moderne Kraftfahrzeuge in zunehmendem Maße Fahraufgaben teilweise oder vollständig übernehmen. Je nach Automatisierungsgrad wird in diesem Zusammenhang von teil-, hoch- oder vollautomatisiertem (oder -automatischem) Fahren gesprochen.

DE 10 2010 039 075 A1 betrifft eine Ausgabevorrichtung für Informationen über eine elektrische Energiemenge. Darin wird auch eine Anzeige mehrerer Ladestationen für ein Elektrofahrzeug sowie eines Start- und eines Zielorts offenbart. Zwischen den einzelnen Orten wird eine Fahrtzeit und an der Position der jeweiligen Orte eine geplante Ankunftszeit angezeigt.

DE 195 19 107 C1 offenbart ebenfalls eine Anzeige von Startort, Zielort und Ladestationen. Dabei ist vorgesehen, dass angezeigt wird, ob Ladestationen belegt oder frei sind. Überdies kann angezeigt werden, ob das Ziel ohne Zwischenladung erreicht werden kann oder ob eine Ladestation als Zwischenziel angefahren werden muss.

EP 0 785 519 A1 beschreibt ein Routenvorbereitungssystem. Dabei können ein Startort, ein Zielort und Zwischenziele mit den jeweils zugehörigen geplanten Ankunftszeiten angezeigt werden.

DE 10 2010 018 334 A1 lehrt eine Navigationseinrichtung, welche zur probeweisen Anzeige der berechneten Fahrzeiten in Abhängigkeit gewählter Konfigurationen, z.B. Betriebsmodi des Fahrzeugs, eingerichtet ist.

US 2007/0106465 A1 beschreibt ein Routenplanungsverfahren. Dabei kann ein Fahrerprofil ausgewählt werden, auf Grundlage dessen die geschätzten Kosten zur Erreichung eines Ziels bestimmt werden.

Bei dem in EP 2 028 057 A2 offenbarten Kraftfahrzeug kann für eine Mehrzahl unterschiedlicher Geschwindigkeiten die jeweils zugehörige Ankunftszeit und der Kraftstoffverbrauch angezeigt werden.

Ausgehend vom Stand der Technik stellt sich die Aufgabe, ein Verfahren zur Bestimmung eines zeitlichen Fahrtverlaufs eines Kraftfahrzeugs anzugeben, das den Fahrer bei der Planung seiner Fahrt und bei der Nutzung der technischen Möglichkeiten des Kraftfahrzeugs in verbesserter Weise unterstützt.

Die Aufgabe wird gelöst bei einem Verfahren und einem Kraftfahrzeug mit den Merkmalen der unabhängigen Ansprüche. Vorteilhafte Weiterbildungen der Erfindung sind Gegenstände der abhängigen Ansprüche.

Bei dem erfindungsgemäßen Verfahren ist zunächst vorgesehen, dass zumindest ein Fahrtziel erfasst wird und eine Fahrtstrecke zu dem zumindest einen Fahrtziel ermittelt wird. Es versteht sich, dass auch mehrere Fahrtziele erfasst werden können. Aus der Reihenfolge der erfassten Fahrtziele ergibt sich, welches Fahrtziel das Endziel der Fahrt ist und welche Fahrtziele Zwischenziele darstellen. Für den Fall mehrerer erfasster Fahrtziele umfasst die Fahrtstrecke eine Mehrzahl von Teilstrecken zwischen den jeweiligen Fahrtzielen. In einem weiteren erfindungsgemäßen Schritt wird ein einstellbarer Fahrmodus des Kraftfahrzeugs für zumindest einen ersten Abschnitt der Fahrtstrecke erfasst. Der zumindest eine erste Abschnitt der Fahrtstrecke kann die gesamte Fahrtstrecke umfassen. Der zumindest eine erste Abschnitt der Fahrtstrecke kann eine gesamte Teilstrecke, also eine Strecke zwischen zwei Fahrzielen, umfassen. Der zumindest eine erste Abschnitt der Fahrtstrecke kann auch einen beliebigen anderen Teil der Fahrtstrecke umfassen. Weiter erfindungsgemäß wird der zeitliche Fahrtverlauf des Kraftfahrzeugs in Abhängigkeit des erfassten Fahrmodus bestimmt und angezeigt.

Die Erfindung bietet also den Vorteil, ausgehend von den an sich im Stand der Technik bekannten Möglichkeiten der Zielführung, die Auswirkung einer Einstellung oder Änderung des Fahrmodus auf den zeitlichen Fahrtverlauf bestimmen und anzeigen zu können. Dies kann insbesondere bei modernen Kraftfahrzeugen mit einer Vielzahl einstellbarer Fahrmodi den Fahrer bei der Entscheidung für einen bestimmten Fahrmodus unterstützen.

Es ist bei dem erfindungsgemäßen Verfahren ausdrücklich nicht vorgesehen, die bereits ermittelte Fahrtstrecke zu dem zumindest einen Fahrtziel in Abhängigkeit des einstellbaren Fahrmodus zu ändern. Mit anderen Worten soll die Zielführung als solche, also die Bestimmung der Fahrtstrecke zu dem zumindest einen Fahrtziel, mit den an sich im Stand der Technik bekannten Mitteln ermittelt und im weiteren Verlauf des Verfahrens nicht geändert werden. Hingegen dient die Erfindung dazu, die zeitlichen Auswirkungen der Wahl eines Fahrmodus (bei gleichbleibender Fahrtstrecke) zu bestimmen und dem Fahrer anzuzeigen.

Erfindungsgemäß ist ferner vorgesehen, dass ein für die Bewältigung der Fahrtstrecke zu dem zumindest einen Fahrtziel erforderlicher oder empfohlener einstellbarer Fahrmodus des Kraftfahrzeugs für zumindest einen zweiten Abschnitt der Fahrtstrecke in Abhängigkeit des erfassten Fahrmodus für den zumindest einen ersten Abschnitt der Fahrtstrecke ermittelt wird. Dabei ist vorgesehen, dass der Schritt des Anzeigens des zeitlichen Fahrtverlaufs ein Anzeigen des erforderlichen oder empfohlenen einstellbaren Fahrmodus des Kraftfahrzeugs für den zweiten Abschnitt der Fahrtstrecke umfasst. Die genannte Weiterbildung der Erfindung trägt in vorteilhafter Weise dem Umstand Rechnung, dass eine Nutzung des einstellbaren Fahrmodus für den ersten Abschnitt der Fahrtstrecke nicht nur eine zeitliche Auswirkung auf den Fahrtverlauf haben kann (wie dies erfindungsgemäß bestimmt wird), sondern auch Auswirkungen auf die im weiteren Fahrtverlauf mögliche oder empfehlenswerte Auswahl von Fahrmodi hat. Hierzu wird in Abhängigkeit des erfassten Fahrmodus für den zumindest einen ersten Abschnitt der Fahrtstrecke ein erforderlicher oder empfohlener Fahrmodus für einen zweiten Abschnitt der Fahrstrecke ermittelt. Es können auch für weitere Abschnitte, also für einen dritten, vierten usw. Abschnitt der Fahrstrecke erforderliche oder empfohlene Fahrmodi ermittelt werden. Dies kann in Abhängigkeit einzelner oder aller erfasster bzw. ermittelter Fahrmodi für die vorangegangenen Abschnitte der Fahrtstrecke geschehen. Beispielsweise könnte also ein Fahrmodus für einen vierten Abschnitt der Fahrtstrecke in Abhängigkeit lediglich des erfassten Fahrmodus für den ersten Abschnitt der Fahrstrecke ermittelt werden. Es könnte aber auch der Fahrmodus für den vierten Abschnitt der Fahrtstrecke in Abhängigkeit der erfassten bzw. ermittelten Fahrmodi für den ersten, zweiten und dritten Abschnitt der Fahrtstrecke ermittelt werden.

Beispielsweise könnte als einstellbarer Fahrmodus des Kraftfahrzeugs für einen ersten Abschnitt der Fahrtstrecke ein Sportmodus erfasst worden sein. Beispielsweise könnte der Sportmodus automatisch vorgeschlagen worden sein, weil der erste Abschnitt der Fahrtstrecke eine kurvige Landstraße umfasst. Da im Sportmodus der Energieverbrauch (beispielsweise ein Verbrauch von Kraftstoff und / oder elektrischer Energie) verhältnismäßig hoch sein kann, könnte für die weitere Fahrt bis zum Fahrtziel ein Fahrmodus mit niedrigem Energieverbrauch (z.B. ein Ecomodus) empfohlen oder sogar erforderlich sein, um das Fahrtziel erreichen. In Abhängigkeit des für den ersten Abschnitt erfassten Sportmodus könnte also für einen zweiten Abschnitt (der beispielsweise die weitere Fahrtstrecke bis zum Fahrtziel umfasst) ein Ecomodus ermittelt werden. Der Schritt des Anzeigens des zeitlichen Fahrtverlaufs umfasst dann ein Anzeigen des Ecomodus für den zweiten Abschnitt der Fahrtstrecke. In einem anderen Beispiel könnte es sich bei dem einstellbaren Fahrmodus für den ersten Abschnitt um einen Modus des hochautomatisierten Fahrens handeln, der mittels einer Benutzereingabe des Fahrers erfasst wird. Verglichen mit einer Fahrt in einem manuellen Fahrmodus kann der Modus des hochautomatisierten Fahrens zusätzliche Zeit kosten, so dass in Abhängigkeit des für den ersten Abschnitt erfassten Modus des hochautomatisierten Fahrens für einen zweiten Abschnitt (der beispielsweise die weitere Fahrtstrecke bis zum Fahrtziel umfasst) ein Sportmodus ermittelt wird, damit das Fahrtziel zu dem (beispielsweise aus einem Kalendereintrag) vorgegebenen Zeitpunkt rechtzeitig erreicht werden kann.

Mit besonderem Vorteil umfasst der Schritt des Erfassens des zumindest einen Fahrtziels ein Erfassen eines in einem Navigationssystem eingestellten Fahrtziels und / oder ein Erfassen eines Kalendereintrags. Das Fahrtziel oder die Fahrtziele können also einem Navigationssystem des Kraftfahrzeugs entnommen werden. In dem Navigationssystem kann das Fahrtziel oder können die Fahrtziele zuvor manuell von einem Nutzer, insbesondere von dem Fahrer des Kraftfahrzeugs, eingestellt worden sein. Das Fahrtziel oder die Fahrtziele können alternativ oder zusätzlich einem persönlichen Kalender eines Nutzers, insbesondere des Fahrers des Kraftfahrzeugs, entnommen werden. Hierzu kann vorgesehen sein, dass ein elektronisches Gerät des Nutzers, beispielsweise ein Smartphone des Fahrers, eine Datenverbindung (z.B. Bluetooth) mit einer das Verfahren ausführenden Einheit des Kraftfahrzeugs aufweist, über welche Datenverbindung Daten zu Kalendereinträgen übermittelt werden können. Kalendereinträge in einem persönlichen Kalender des Nutzes können neben einem Betreff (also einer Bezeichnung des Termins) Angaben über Ort und Zeit des Termins enthalten. Diese Angaben können zur Erfassung des Fahrtziels genutzt werden. In besonders vorteilhafter Ausgestaltung werden mehrere zukünftige Kalendereinträge genutzt, um den vollständigen voraussichtlichen zeitlichen Fahrtverlauf anzuzeigen, in welchem die Orte und Zeiten aller zukünftigen Termin eines bestimmten Zeitraums (z.B. des aktuellen Tages) enthalten sind.

Es ist besonders vorteilhaft, wenn der einstellbare Fahrmodus einen Modus eines automatisierten Fahrens umfasst, insbesondere einen Modus des teil-, hoch- oder vollautomatisierten Fahrens. Wie eingangs erwähnt werden moderne Kraftfahrzeuge zunehmend die Möglichkeit bieten, dem Fahrer einen Teil oder alle seiner Fahraufgaben abzunehmen. Bei hoch- oder vollautomatisiertem Fahren fährt das Kraftfahrzeug vollständig selbstständig, so dass der Fahrer seine Aufmerksamkeit vom Verkehrsgeschehen abwenden und sich anderen Tätigkeiten widmen kann. Jedoch können automatisiert fahrende Kraftfahrzeuge gewissen Beschränkungen unterliegen, die eine Änderung, insbesondere eine Verlängerung, der Fahrtzeit gegenüber einem manuellen Fahrmodus bewirken können. Beispielsweise kann für automatisiert fahrende Kraftfahrzeuge eine Geschwindigkeitsbegrenzung und / oder eine Begrenzung auf eine Benutzung von für den automatisieren Fahrbetrieb freigegebenen Fahrstreifen bestehen. Die Erfindung in der genannten Ausführungsform bietet den Vorteil, dass der Fahrer unmittelbar die Auswirkung der Wahl eines Modus eines automatisierten Fahrens auf den zeitlichen Fahrtverlauf erkennen kann. Er kann dann abwägen, ob er die in der Regel verlängerte Reisezeit in Kauf nehmen möchte, um in der Phase des hoch- oder vollautomatisierten Fahrens anderen Tätigkeiten nachgehen zu können.

Eine weitere vorteilhafte Ausgestaltung der Erfindung ergibt sich, wenn das Kraftfahrzeug ein verbrennungsmotorisch und / oder elektromotorisch antreibbares Hybridfahrzeug ist, wobei der einstellbare Fahrmodus einen Antriebsmodus umfasst, insbesondere einen rein verbrennungsmotorischen oder rein elektromotorischen oder einen kombinierten Antriebsmodus. Der Begriff Hybridfahrzeug soll dabei vorliegend alle Kraftfahrzeuge umfassen, die sowohl über einen Verbrennungsmotor als auch über einen Elektromotor verfügen und die entweder nur mittels des Verbrennungsmotors (verbrennungsmotorischer Antriebsmodus) oder nur mittels des Elektromotors (elektromotorischer Antriebsmodus) oder mittels beider Motoren zugleich (kombinierter Antriebsmodus) angetrieben werden können. Wie zuvor mit Bezug zu Fahrmodi des automatisierten Fahrens erläutert, kann auch die Auswahl des Antriebsmodus Auswirkungen auf den zeitlichen Fahrtverlauf haben.

Mit weiterem Vorteil umfasst der einstellbare Fahrmodus einen Fahrerlebnismodus, insbesondere einen Sport-, Komfort- oder Eco-Modus. Die genannten Fahrmodi unterscheiden sich voneinander durch ihre jeweiligen Fahreigenschaften und durch den aus diesen resultierenden Kraftstoff- bzw. Energieverbrauch. So kann beispielsweise in einem Sportmodus eine maximale Leistungsfähigkeit eines Verbrennungsmotors freigegeben werden, was allerdings den durchschnittlichen Kraftstoffverbrauch erhöhen kann, wohingegen in einem Eco-Modus die Leistungsfähigkeit des Verbrennungsmotors begrenzt sein kann, wodurch der durchschnittliche Kraftstoffverbrauch sinken kann. Wie zuvor mit Bezug zu Modi des automatisierten Fahrens erläutert, kann auch die Auswahl des Fahrerlebnismodus Auswirkungen auf den zeitlichen Fahrtverlauf haben.

Bei einer Ausführungsform kann vorgesehen sein, dass der Schritt des Erfassens des einstellbaren Fahrmodus ein Erfassen einer Benutzereingabe umfasst. Die Benutzereingabe kann beispielsweise darin bestehen, dass der Fahrer mittels eines Bedienelements einen Modus eines automatisierten Fahrens, einen Antriebsmodus und / oder einen Fahrerlebnismodus wählt. Die Ausführungsform bietet den Vorteil, dass dem Fahrer die Auswirkung seiner Benutzereingabe auf den zeitlichen Fahrtverlauf unmittelbar angezeigt und somit verdeutlicht werden kann.

Bei einer weiteren Ausführungsform kann zusätzlich oder alternativ vorgesehen sein, dass der Schritt des Erfassens des einstellbaren Fahrmodus ein automatisches Vorschlagen des einstellbaren Fahrmodus umfasst. Besonders vorteilhaft ist es dabei, wenn das automatische Vorschlagen des einstellbaren Fahrmodus in Abhängigkeit zumindest eines Parameters aus der durch
- einen Straßentyp,
- eine Streckenbeschränkung und
- einen Energieverbrauch und / oder einen Energiespeicherfüllstand des Kraftfahrzeugs
gebildeten Gruppe erfolgt. Ein Straßentyp kann beispielsweise eine Autobahn, eine Landstraße, eine Ortsstraße oder dergleichen sein. Eine Streckenbeschränkung kann eine Geschwindigkeitsbeschränkung umfassen. Eine Streckenbeschränkung kann auch umfassen, dass auf einer Strecke automatisiertes Fahren nicht zulässig oder vorgeschrieben ist. Ein Energieverbrauch und / oder ein Energiespeicherfüllstand des Kraftfahrzeugs kann insbesondere bei einem Elektro- oder Hybridfahrzeug einen elektrischen Energieverbrauch bzw. einen Füllstand der Fahrzeugbatterie umfassen.

Es kann also beispielsweise ein Fahrmodus automatisch vorgeschlagen werden, dessen Einstellung im weiteren Fahrtverlauf obligatorisch werden wird. Beispielsweise könnte ein elektromotorischer Antriebsmodus automatisch dann vorgeschlagen werden, wenn der Fahrtverlauf des Kraftfahrzeugs durch ein Gebiet mit Emissionsbeschränkungen führt, beispielsweise durch ein Innenstadtgebiet, das nur elektromotorisch befahren werden darf. Es kann auch ein Fahrmodus automatisch vorgeschlagen werden, dessen Einstellung im weiteren Fahrtverlauf empfehlenswert oder überhaupt möglich sein wird. Beispielsweise könnte vor einer kurvigen Landstraße eine Einstellung eines Sportmodus vorgeschlagen werden. Vor einer Autobahnfahrt könnte ein Modus eines hochautomatisierten Fahrens vorgeschlagen werden.

In weiterer Ausgestaltung umfasst der Schritt des Anzeigens des zeitlichen Fahrtverlaufs ein Anzeigen eines Startpunkts, des zumindest einen Fahrtziels und des zumindest einen ersten Abschnitts der Fahrtstrecke. Dabei umfasst das Anzeigen des zumindest einen Fahrtziels ein Anzeigen einer voraussichtlichen Ankunftszeit an dem zumindest einen Fahrtziel. Überdies umfasst das Anzeigen des zumindest einen ersten Abschnitts der Fahrtstrecke ein Anzeigen des erfassten einstellbaren Fahrmodus für den ersten Abschnitt der Fahrtstrecke. Es ist also mit anderen Worten vorgesehen, dem Nutzer alle wesentlichen Informationen zusammengefasst darzustellen, beispielsweise in einer Art Zeitleiste.

Mit weiterem Vorteil werden zumindest zwei alternative einstellbare Fahrmodi des Kraftfahrzeugs für den zumindest einen ersten Abschnitt der Fahrtstrecke erfasst. In Abhängigkeit der erfassten Fahrmodi werden sodann zumindest zwei zeitliche Fahrtverläufe des Kraftfahrzeugs bestimmt. Schließlich umfasst der Schritt des Anzeigens ein gleichzeitiges Anzeigen der zeitlichen Fahrtverläufe. Auf diese Weise werden dem Fahrer in besonders vorteilhafter Weise die Auswirkungen einer von ihm zu treffenden Entscheidung zwischen mindestens zwei zur Verfügung stehenden Fahrmodi veranschaulicht.

Die Erfindung wird auch verwirklicht durch ein Kraftfahrzeug mit Mitteln zur Durchführung des vorstehend beschriebenen Verfahrens. Ein erfindungsgemäßes Kraftfahrzeug umfasst zumindest zwei einstellbare Fahrmodi, eine Anzeigevorrichtung und ein Navigationssystem. Die Durchführung der Verfahrensschritte kann in einem hierfür vorgesehenen Steuergerät des Kraftfahrzeugs erfolgen. Hierzu kann beispielsweise ein als Zentralcomputer fungierendes Steuergerät des Kraftfahrzeugs durch geeignete Programmierung eingerichtet werden.

Weitere Ausführungsformen der Erfindung werden nachfolgend anhand beispielhafter Darstellungen erläutert. Es zeigen
- Fig. 1: eine Darstellung eines zeitlichen Fahrtverlaufs gemäß dem Stand der Technik,
- Fig. 2: eine beispielhafte Darstellung eines durch eine erste Ausführungsform des erfindungsgemäßen Verfahrens bestimmten zeitlichen Fahrtverlaufs und
- Fig. 3: eine beispielhafte Darstellung zweier durch eine zweite Ausführungsform des erfindungsgemäßen Verfahrens bestimmter zeitlicher Fahrtverläufe.

Gleiche Bezugszeichen kennzeichnen in den Figuren gleiche Merkmale der dargestellten Ausführungsformen der Erfindung. Es wird darauf hingewiesen, dass es sich bei den dargestellten Figuren sowie der zugehörigen Beschreibung lediglich um Ausführungsbeispiele der Erfindung handelt. Insbesondere sind Darstellungen von Merkmalskombinationen in den Figuren und / oder der Figurenbeschreibung nicht dahingehend auszulegen, dass die Erfindung zwingend die Verwirklichung aller genannten Merkmale erfordert. Andere Ausführungsformen der Erfindung können weniger, mehr und / oder andere Merkmale enthalten. Der Schutzbereich und die Offenbarung der Erfindung ergeben sich aus den beiliegenden Patentansprüchen und der vollständigen Beschreibung. Es wird zudem darauf hingewiesen, dass es sich bei den Darstellungen um Prinzipdarstellungen von Ausführungsformen der Erfindung handelt. Die Anordnung der einzelnen dargestellten Elemente zueinander ist nur beispielhaft gewählt und kann bei anderen Ausführungsformen der Erfindung anders gewählt werden. Weiterhin ist die Darstellung nicht unbedingt maßstabsgetreu. Einzelne dargestellte Merkmale können zu Zwecken der besseren Veranschaulichung vergrößert oder verkleinert dargestellt sein.

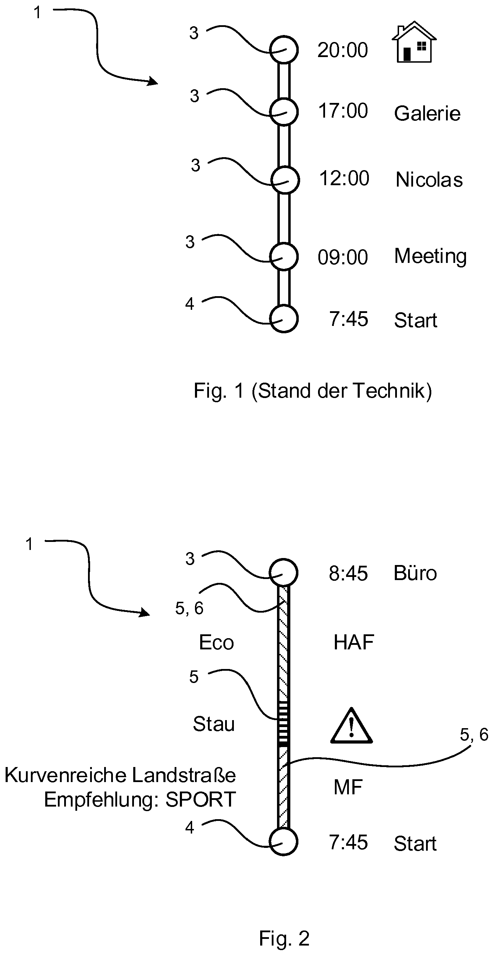

Fig. 1 zeigt eine Darstellung eines zeitlichen Fahrtverlaufs 1, wie sie aus dem Stand der Technik bekannt ist. Der zeitliche Fahrtverlauf 1 beginnt mit dem Startpunkt 4, welcher durch eine Uhrzeit und die Bezeichnung "Start" bezeichnet ist. Die Uhrzeit kann eine aktuelle Uhrzeit oder eine geplante Startzeit sein. Die Fahrtziele 3 sind entlang eines von dem Startort 4 ausgehenden Zeitstrahls angeordnet. Sie sind jeweils mit der Uhrzeit, zu denen sie voraussichtlich erreicht werden, und mit einer Bezeichnung des Fahrtziels gekennzeichnet. Die Bezeichnung des Fahrtziels kann die Bezeichnung eines zu dem Fahrtziel 3 gehörigen Kalendereintrags (z.B. "Nicolas") und / oder die Ortsbezeichnung des Fahrtziels 3 (z.B. "Galerie") umfassen. Die Bezeichnung kann auch ein Symbol umfassen, beispielsweise das in Fig. 1 dargestellte Haussymbol für "Zuhause". In der Darstellung des zeitlichen Fahrtverlaufs 1 können Zeiten, die keine Fahrtzeiten sind, gesondert dargestellt sein, was jedoch in Fig. 1 nicht der Fall ist.

Fig. 2 zeigt eine beispielhafte Darstellung eines durch eine erste Ausführungsform des erfindungsgemäßen Verfahrens bestimmten zeitlichen Fahrtverlaufs 1. Der Fahrtverlauf 1 beginnt mit dem Startort 4 und endet am Fahrtziel 3. Im dargestellten Beispiel handelt es sich um eine Fahrt vom Startort 4 zu dem Fahrtziel 3 "Büro". Der für die Darstellung des Fahrtverlaufs 1 gewählte Zeitstrahl umfasst drei unterschiedliche Abschnitte 5 der Fahrtstrecke.

Im vorliegenden Beispiel kann das Fahrtziel 3 "Büro" aus einem persönlichen elektronischen Kalender des Fahrers erfasst worden sein. Hierzu ist es nicht notwendigerweise erforderlich, dass der Kalender das Fahrtziel 3 explizit als Termin enthält. Vielmehr kann das Fahrtziel 3 auch mittelbar aus einem vorhandenen Kalendereintrag erfasst werden. Beispielsweise kann der Kalender einen Eintrag zu einem für 9:00 Uhr geplanten Meeting im Büro aufweisen. Aufgrund der aktuellen Uhrzeit, die beispielsweise die neben dem Startort 4 dargestellte Uhrzeit "7:45" sein kann, kann als Fahrtziel 3 das Büro erfasst werden, welches spätestens um 9:00 Uhr (möglicherweise aber auch davor) erreicht werden soll.

Mittels eines Navigationssystems des Fahrzeugs wird die Fahrtstrecke von dem Startort 4 zu dem Fahrtziel 3 ermittelt. Im vorliegenden Beispiel führt ein vom Startort 4 aus gesehen erster Abschnitt 5 entlang einer kurvenreichen Landstraße. Dies wird in der in Fig. 2 gezeigten Darstellung als erklärender Hinweis angezeigt. Im vorliegenden Beispiel ist vorgesehen, dass ein einstellbarer Fahrmodus 6 des Kraftfahrzeugs einen Modus des automatisierten Fahrens und einen Fahrerlebnismodus, insbesondere einen Sportmodus, umfasst. Das Fahrzeug kann in diesem Beispiel auch einen Fahrmodus 6 umfassen, der eine Kombination aus einem Modus des hochautomatisierten Fahrens und einem Eco-Modus ist.

Das Kraftfahrzeug erfasst im vorliegenden Beispiel den einstellbaren Fahrmodus 6 für den ersten Abschnitt 5 der Fahrtstrecke, indem ein Sportmodus automatisch vorgeschlagen wird. Mit anderen Worten erkennt das Fahrtzeug, dass der Sportmodus für die kurvenreiche Landstraße am besten geeignet ist, und schlägt daher diesen Fahrmodus 6 automatisch vor. Der Vorschlag wird dem Fahrer mittels der in Fig. 2 dargestellten Empfehlung übermittelt. Der angezeigte Hinweis "Kurvenreiche Landstraße" dient dazu, den Fahrer die Gründe für den automatischen Vorschlag zu erläutern. Die Fahrtstrecke umfasst weiterhin einen zweiten Fahrtabschnitt 5 ("Stau") und einen dritten Fahrabschnitt 5.

In Abhängigkeit des automatisch erfassen Fahrmodus 6 für den ersten Abschnitt wird der zeitliche Fahrtverlauf 1 des Kraftfahrzeugs bestimmt. Hierzu wird im vorliegenden Beispiel noch ein empfohlener Fahrmodus 6 für den dritten Abschnitt 5 der Fahrtstrecke in Abhängigkeit des erfassten Sportmodus 6 für den ersten Abschnitt 5 der Fahrtstrecke ermittelt. Aufgrund des im Sportmodus 6 zu erwartenden höheren Energieverbrauchs (Kraftstoffverbrauch und / oder Verbrauch elektrischer Energie) und des im zweiten Abschnitt 5 zu erwartenden Staus kann das Ziel nur erreicht werden, wenn der dritte Abschnitt in einem energiesparenden Fahrmodus 6 zurückgelegt wird, der im vorliegenden Beispiel der genannte Kombinationsmodus 6 (Ecomodus mit hochautomatisiertem Fahren, HAF) ist. Dies wird in der Darstellung durch entsprechende Hinweise ("HAF", "Eco") sowie durch eine entsprechende Gestaltung der Abschnitte 5 der Zeitleiste dargestellt.

Dem Fahrer kann mittels der in Fig. 2 gezeigten Darstellung, welche das Ergebnis des beschriebenen Verfahrens ist, auf einen Blick erfassen, welche Auswirkungen die Wahl des Fahrmodus im Hinblick auf die voraussichtlichen Ankunftszeiten sowie im Hinblick auf zur Bewältigung der weiteren Fahrabschnitte 5 nötige mögliche Einschränkungen bezüglich verfügbarer Fahrmodi hat.

Es kann vorgesehen sein, dass der Fahrmodus 6 für den ersten Abschnitt 5 durch eine manuelle Eingabe des Fahrers erfasst wird. Dies kann auch in Kombination mit dem beschriebenen automatischen Vorschlagen des Fahrmodus 6 geschehen. Beispielsweise kann vorgesehen sein, dass der Fahrer alle zur Verfügung stehenden Fahrmodi für den ersten Abschnitt 5 durch Betätigung eines entsprechenden Bedienelements "durchblättern" kann. Mit jeder Änderung des Fahrmodus könnte das Verfahren erneut durchgeführt werden, so dass die Anzeige der Fahrtstrecke 1 sich entsprechend dem jeweils ausgewählten Fahrmodus 6 für den ersten Abschnitt 5 ändert. Auf diese Weise kann der Fahrer schnell die ihm zur Verfügung stehenden Optionen und die sich jeweils ergebenden Konsequenzen für den zeitlichen Fahrtverlauf 1 erfassen.

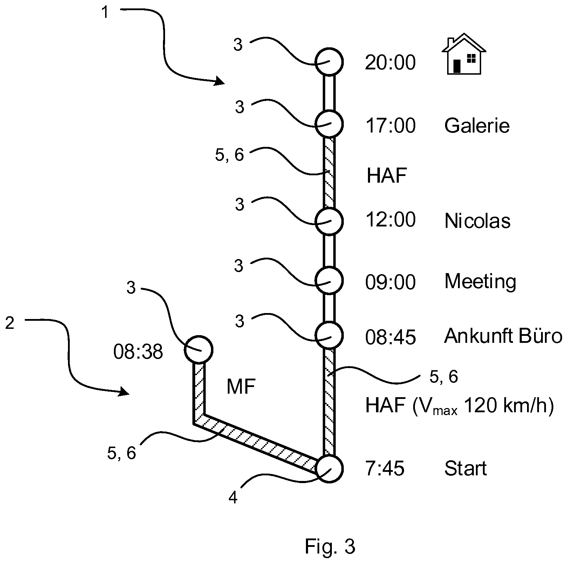

Eine zweite beispielhafte Ausführungsform der Erfindung sieht vor, dass alle oder einige zur Verfügung stehende alternative zeitliche Fahrtverläufe gleichzeitig dargestellt werden. Hierzu zeigt Fig. 3 eine beispielhafte Darstellung zweier durch die zweite Ausführungsform des erfindungsgemäßen Verfahrens bestimmter zeitlicher Fahrtverläufe 1, 2.

Beide Fahrtverläufe 1, 2 weisen den gleichen Startort 4 auf. Ein erstes erfasstes Fahrtziel 3 ist wie bereits mit Bezug zu Fig. 1 und Fig. 2 beschrieben der Ort "Büro". Der ersten Fahrverlauf 1 weist weitere Fahrtziele 3 und zwischen diesen liegende Abschnitte 5 auf. Für den Abschnitt 5 zwischen den Fahrtzielen 3 "Nicolas" und "Galerie" ist ein Fahrmodus 6 des hochautomatisierten Fahrens (HAF) angezeigt.

Die weiteren Fahrtziele 3 ("Meeting", "Nicolas", "Galerie" und "Zuhause") können auch Bestandteil des zweiten dargestellten zeitlichen Fahrtverlaufs 2 sein. Dies ist jedoch in Fig. 3 nicht dargestellt. Die Darstellung wurde nicht nur aus Gründen der besseren Übersichtlichkeit gewählt. Es soll auch explizit auf die Möglichkeit hingewiesen werden, dass nur das jeweils nächste Fahrtziel 3 dargestellt wird.

Für den ersten Abschnitt 5 besteht die Wahl zwischen einem Modus des hochautomatisierten Fahrens (HAF) und einem manuellen Fahrmodus (MF). Beide alternativen einstellbaren Fahrmodi 6 werden erfindungsgemäß erfasst. Es werden dann die beiden alternativen zeitlichen Fahrtverläufe 1, 2 in Abhängigkeit der erfassten Fahrmodi 6 bestimmt und gleichzeitig angezeigt. Der Fahrer kann somit auf einen Blick erfassen, welche Optionen ihm zur Verfügung stehen. Im dargestellten Beispiel kann der Fahrer sich für den manuellen Fahrmodus 6 entscheiden, wodurch er schneller im Büro ankommt (Fahrtverlauf 1). Er kann sich auch für den Modus 6 des hochautomatischen Fahrens entscheiden, wodurch er später im Büro eintrifft, allerdings während der Fahrt fahrfremden Tätigkeiten nachgehen kann (Fahrtverkauf 2).

Im zeitlichen Fahrtverlauf 1 ist der Hinweis auf den Modus des hochautomatisierten Fahrens ("HAF") für den ersten Abschnitt 5 mit dem zusätzlichen Hinweis auf eine in diesem Fahrmodus 6 geltende Höchstgeschwindigkeit ("Vₘₐₓ 120 km/h") versehen. Diese Geschwindigkeitsbegrenzung ist der Grund dafür, dass die Ankunft im Büro in dem Fahrmodus 6 des hochautomatisierten Fahrens später erfolgt als in dem alternativen manuellen Fahrmodus 6 des Fahrtverlaufs 2. Für den Fahrer stellt der Hinweis auf die Geschwindigkeitsbegrenzung eine erklärende Zusatzinformation dar. Hierdurch kann das Vertrauen des Fahrers in das erfindungsgemäße Verfahren gestärkt werden.

### Bezugszeichenliste

- 1, 2: Fahrtverlauf (Darstellung)
- 3: Fahrtziel
- 4: Startort
- 5: Abschnitt der Fahrtstrecke
- 6: Fahrmodus

## Patentansprüche

1. Verfahren zur Bestimmung eines zeitlichen Fahrtverlaufs (1, 2) eines Kraftfahrzeugs mit den Schritten
- Erfassen zumindest eines Fahrtziels (3),
- Ermitteln einer Fahrtstrecke zu dem zumindest einen Fahrtziel (3),
- Erfassen eines einstellbaren ersten Fahrmodus (6) des Kraftfahrzeugs für zumindest einen ersten Abschnitt (5) der Fahrtstrecke,
- Ermitteln eines für die Bewältigung der Fahrtstrecke zu dem zumindest einen Fahrtziel (3) erforderlichen oder empfohlenen einstellbaren zweiten Fahrmodus (6) des Kraftfahrzeugs für zumindest einen zweiten Abschnitt (5) der Fahrtstrecke in Abhängigkeit des ersten Fahrmodus (6),
- Bestimmen des zeitlichen Fahrtverlaufs (1, 2) des Kraftfahrzeugs in Abhängigkeit des ersten Fahrmodus (6) und des zweiten Fahrmodus (6) und
- Anzeigen des zeitlichen Fahrtverlaufs (1, 2), umfassend ein Anzeigen des zweiten Fahrmodus (6).

2. Verfahren nach Anspruch 1, wobei der Schritt des Erfassens des zumindest einen Fahrtziels (3) ein Erfassen eines in einem Navigationssystem eingestellten Fahrtziels (3) und / oder ein Erfassen eines Kalendereintrags umfasst.

3. Verfahren nach einem der vorhergehenden Ansprüche, wobei der erste Fahrmodus (6) einen Modus eines automatisierten Fahrens umfasst, insbesondere einen Modus des teil-, hoch- oder vollautomatisierten Fahrens.

4. Verfahren nach einem der vorhergehenden Ansprüche, wobei das Kraftfahrzeug ein verbrennungsmotorisch und / oder elektromotorisch antreibbares Hybridfahrzeug ist, wobei der erste Fahrmodus (6) einen Antriebsmodus umfasst, insbesondere einen rein verbrennungsmotorischen oder rein elektromotorischen oder einen kombinierten Antriebsmodus.

5. Verfahren nach einem der vorhergehenden Ansprüche, wobei der erste Fahrmodus (6) einen Fahrerlebnismodus umfasst, insbesondere einen Sport-, Komfort- oder Eco-Modus.

6. Verfahren nach einem der vorhergehenden Ansprüche, wobei der Schritt des Erfassens des ersten Fahrmodus (6) ein Erfassen einer Benutzereingabe umfasst.

7. Verfahren nach einem der vorhergehenden Ansprüche, wobei der Schritt des Erfassens des ersten Fahrmodus (6) ein automatisches Vorschlagen des ersten Fahrmodus umfasst.

8. Verfahren nach Anspruch 7, wobei das automatische Vorschlagen des ersten Fahrmodus (6) in Abhängigkeit zumindest eines Parameters aus der durch
- einen Straßentyp,
- eine Streckenbeschränkung und
- einen Energieverbrauch und / oder einen Energiespeicherfüllstand des Kraftfahrzeugs
gebildeten Gruppe erfolgt.

9. Verfahren nach einem der vorhergehenden Ansprüche, wobei der Schritt des Anzeigens des zeitlichen Fahrtverlaufs (1, 2) ein Anzeigen
- eines Startpunkts (4),
- des zumindest einen Fahrtziels (3) und
- des zumindest einen ersten Abschnitts (5) der Fahrtstrecke
umfasst, wobei
- das Anzeigen des zumindest einen Fahrtziels (3) ein Anzeigen einer voraussichtlichen Ankunftszeit an dem zumindest einen Fahrtziel (3) umfasst und
- das Anzeigen des zumindest einen ersten Abschnitts (5) der Fahrtstrecke ein Anzeigen des ersten Fahrmodus (6)
umfasst.

10. Verfahren nach einem der vorhergehenden Ansprüche mit den Schritten
- Erfassen zumindest zweier alternativer einstellbarer erster Fahrmodi (6) des Kraftfahrzeugs für den zumindest einen ersten Abschnitt (5) der Fahrtstrecke,
- Bestimmen zumindest zweier zeitlicher Fahrtverläufe (1, 2) des Kraftfahrzeugs in Abhängigkeit der ersten Fahrmodi (6),
- gleichzeitiges Anzeigen der zeitlichen Fahrtverläufe (1, 2).

11. Kraftfahrzeug mit Mitteln zur Durchführung des Verfahrens nach einem der vorhergehenden Ansprüche mit
- zumindest zwei einstellbaren ersten Fahrmodi (6),
- einer Anzeigevorrichtung und
- einem Navigationssystem.

## Claims

1. A method for determining a route and time frame (1, 2) of a motor vehicle, said method comprising the following steps:
- detecting at least one destination (3);
- ascertaining a travel route to the at least one destination (3);
- detecting an adjustable first travel mode (6) of the motor vehicle for at least one first portion (5) of the travel route,
- depending on the first travel mode (6), ascertaining an adjustable second travel mode (6) of the vehicle for at least one second portion (5) of the travel route which is necessary or recommended for successfully traversing the travel route to the at least one destination (3),
- determining the route and time frame (1, 2) of the motor vehicle depending on the first travel mode (6) and the second travel mode (6); and
- displaying the route and time frame (1, 2), this comprising a display of the second travel mode (6).

2. A method according to claim 1, wherein the step of detecting the at least one destination (3) comprises detection of a destination (3) set in a navigation system and/or detection of a calendar entry.

3. A method according to either one of the preceding claims, wherein the first travel mode (6) comprises a mode for automated travel, more especially a mode for partially, highly, or fully automated travel.

4. A method according to any one of the preceding claims, wherein the motor vehicle is a hybrid vehicle that can be driven by an internal combustion engine and/or by an electric motor, wherein the first travel mode (6) comprises a drive mode, more especially a drive mode with drive solely by internal combustion engine or solely by electric motor or a combined drive mode.

5. A method according to any one of the preceding claims, wherein the first travel mode (6) comprises a driving experience mode, more especially a sports mode, comfort mode or eco mode.

6. A method according to any one of the preceding claims, wherein the step of detecting the first travel mode (6) comprises detection of a user input.

7. A method according to any one of the preceding claims, wherein the step of detecting the first travel mode (6) comprises an automatic recommendation of the first travel mode.

8. A method according to claim 7, wherein the automatic recommendation of the first travel mode (6) is made depending on at least one parameter from the group formed by:
- a road type;
- a distance limitation; and
- an energy consumption and/or an energy store level of the motor vehicle.

9. A method according to any one of the preceding claims, wherein the step of displaying the route and time frame (1, 2) comprises the display of:
- a starting point (4);
- the at least one destination (3); and
- the at least one first portion (5) of the travel route;
wherein
- the display of the at least one destination (3) comprises the display of an anticipated time of arrival at the at least one destination (3), and
- the display of the at least one first portion (5) of the travel route comprises the display of the first travel mode (6).

10. A method according to any one of the preceding claims, comprising the following steps:
- detecting at least two alternative adjustable first travel modes (6) of the motor vehicle for the at least one first portion (5) of the travel route;
- determining at least two routes and time frames (1, 2) of the motor vehicle depending on the first travel modes (6),
- displaying the routes and time frames (1, 2) simultaneously.

11. A motor vehicle with means for carrying out the method according to any one of the preceding claims, with
- at least two adjustable first travel modes (6),
- a display device, and
- a navigation system.

## Revendications

1. Procédé permettant de déterminer le déroulement du trajet dans le temps (1, 2) d'un véhicule comprenant des étapes consistant à :
- détecter au moins une destination de trajet (3),
- déterminer un itinéraire de trajet vers la destination du trajet (3),
- détecter un premier mode de conduite (6) du véhicule pouvant être réglé pour au moins un premier segment (5) de l'itinéraire du trajet,
- déterminer un second mode de conduite (6) du véhicule pouvant être réglé, nécessaire ou recommandé pour la gestion de l'itinéraire du trajet vers la destination (3) du trajet pour au moins un second segment (5) de l'itinéraire du trajet en fonction du premier mode de conduite (6),
- déterminer le déroulement du trajet dans le temps (1, 2) du véhicule en fonction du premier mode de conduite (6) et du second mode de conduite (6), et
- afficher le déroulement du trajet dans le temps (1, 2) y compris un affichage du second mode de conduite (6).

2. Procédé conforme à la revendication 1,
selon lequel l'étape de détection de la destination du trajet (3) comprend la détection d'une destination du trajet (3) réglée dans un système de navigation et/ou la détection d'une entrée d'agenda.

3. Procédé conforme à l'une des revendications précédentes,
selon lequel le premier mode de conduite (6) est un mode de conduite automatisé, en particulier un mode de conduite partiellement fortement ou totalement automatisé.

4. Procédé conforme à l'une des revendications précédentes,
selon lequel le véhicule est un véhicule hybride pouvant être entraîné par un moteur à combustion interne et/ou par un moteur électrique, et le premier mode de conduite (6) est un entraînement, en particulier un mode d'entraînement exclusivement par un moteur à combustion interne ou un mode d'entraînement exclusivement par un moteur électrique ou un mode d'entraînement mixte.

5. Procédé conforme à l'une des revendications précédentes,
selon lequel le premier mode de conduite (6) est un mode d'expérience de conduite en particulier un mode sportif, un mode de confort ou un mode économique.

6. Procédé conforme à l'une des revendications précédentes,
selon lequel l'étape consistant à détecter le premier mode de conduite (6) est la détection d'une entrée d'utilisateur.

7. Procédé conforme à l'une des revendications précédentes,
selon lequel l'étape de détection du premier mode de conduite (6) est une proposition automatique du premier mode de conduite.

8. Procédé conforme à la revendication 7,
selon lequel la proposition automatique du premier mode de conduite (6) est effectuée en fonction d'au moins un paramètre choisi dans le groupe formé par :
le type de chaussée,
une limitation de l'itinéraire du trajet, et
la consommation d'énergie et/ou l'état de l'accumulateur d'énergie du véhicule.

9. Procédé conforme à l'une des revendications précédentes,
selon lequel l'étape d'affichage du déroulement du trajet dans le temps (1, 2) comprend un affichage :
- d'un point de départ (4),
- de la destination du trajet (3), et
- du premier segment (5) de l'itinéraire du trajet,
- l'affichage de la destination du trajet (3) comprenant l'affichage du temps d'arrivée probable à la destination du trajet (3), et
- l'affichage du premier segment (5) de l'itinéraire du trajet comprenant l'affichage du premier mode de conduite (6).

10. Procédé conforme à l'une des revendications précédentes comprenant des étapes consistant à :
- détecter au moins deux premiers modes de conduite (6) du véhicule pouvant être réglés de façon alternative pour le premier segment (5) de l'itinéraire du trajet,
- déterminer au moins deux déroulements du trajet du véhicule dans le temps (1, 2) en fonction des premier modes de déplacement (6),
- afficher simultanément les déroulements du trajet dans le temps (1, 2).

11. Véhicule comprenant des moyens permettant la mise en oeuvre du procédé conforme à l'une des revendications précédents ayant :
- au moins deux premiers modes de conduire réglables (6),
- un dispositif d'affichage, et
- un système de navigation.
